# EUROPÄISCHE PATENTANMELDUNG

(11) **EP 0 705 793 A1**
(43) Veröffentlichungstag der Anmeldung: **10.04.1996**
(21) Anmeldenummer: 95113040.0
(22) Anmeldetag: 18.08.1995
(51) Int. Cl.: C02F 1/62, C02F 1/42

(54) **Verfahren zum Aufbereiten von Zink und Chrom enthaltenden Stoffgemischen wie Abwässer, Prozessbäder, Galvanikschlämme oder dergleichen**

(30) Priorität: 06.10.1994 DE 4435774; 16.03.1995 DE 19509575
(71) Anmelder: Rimmel Gmbh, D-87437 Kempten (DE)
(72) Erfinder: Seitz, Peter, D-87448 Waltenhofen-Oberdorf (DE); Kolesar, Peter, Dr., D-87439 Kempten (DE)
(74) Vertreter: MEISSNER, BOLTE & PARTNER

(57) **Zusammenfassung**

Die Erfindung betrifft ein Verfahren zum Aufbereiten von Zink und Chrom enthaltenden Stoffgemischen, wie beispielsweise Abwässer, Prozeßbäder und Galvanikschlämme. Mit dem Verfahren gelingt das Separieren von Metallen in monometallische Fraktionen. Gemäß dem Verfahren erfolgt zunächst ein Überführen des Ausgangsstoffgemisches in eine schwach saure Lösung, in der dann die metallischen Komponenten als zwei- oder dreiwertige Ionen vorliegen. Anschließend wird die Lösung über eine oder mehrere in Kolonne angeordnete, mit Selektivharz gefüllte Ionenaustauscher geleitet, wobei das Selektivharz als aktive Gruppe Di-(2-ethylhexyl)-phosphorsäure enthält. In das Selektivharz erfolgt dann ein Einbinden der Zinkionen, wobei die Chromionen den Ionenaustauscher unter Bildung einer zinkfreien chromhaltigen Lösung passieren. Die so erhaltenen Fraktionen können mit weiteren an sich bekannten Recyclingverfahren weiterbehandelt werden.

## Beschreibung

Die Erfindung betrifft ein Verfahren zum Aufbereiten von Zink und Chrom enthaltenden Stoffgemischen, wie Abwässer, Prozeßbäder, Galvanikschlämme o. dgl.

In Betrieben der Galvanotechnik fallen Abwässer und Prozeßbäder an, welche metallische Komponenten oder Stoffgemische enthalten. Derartige metallhaltige Lösungen oder Schlämme sind bisher deshalb nicht wirtschaftlich zu verwerten, da ein Trennen oder Separieren der Vielzahl von enthaltenen Metallen bisher nur mit außerordentlichem hohen Aufwand möglich ist.

Metallhaltige Galvanikschlämme können als Sekundärrohstoffe für die Metallurgie nur dann verwendet werden, wenn eine monometallische Aufbereitung möglich ist oder wenn definierte Metallkombinationen enthalten sind.

Es wurde bereits vorgeschlagen, einzelne Abwässer oder Prozeßbäder separat aufzufangen, so daß kein Mischabwasser entsteht. Dieses ist jedoch aus Kostengründen nur in beschränktem Umfang durchführbar. Darüber hinaus bleibt auch bei getrennter Abwasserbehandlung ein großer Anteil übrig, der bereits beim eigentlichen Galvanikprozeß mehrere verschiedene Metallkomponenten enthält. Dies sind insbesondere Zinkchromatierungen bzw. deren Abwässer und aus diesen entstandener Galvanikschlamm, der in großen Mengen anfällt, da daß Verzinken die verbreiteste galvanische Oberflächenbehandlung ist. Die Metallkombination Zink und Chrom konnte bisher keinerlei kostengünstigen Recyclingverfahren unterzogen werden.

Es ist zwar bekannt, Elektrolyseverfahren oder eine getrennte Fällung zum Separieren von Zink und Chrom zu nutzen, jedoch konnte sich keines der vorgenannten Verfahren in der betrieblichen Praxis durchsetzen.

Es ist daher Aufgabe der Erfindung, ein Verfahren zum Aufbereiten von Zink und Chrom enthaltenden Stoffgemischen, wie Abwässer, Prozeßbäder, galvanische Schlämme und dergleichen vorzuschlagen, welches es gestattet, getrennte, recyclingfähige Fraktionen zu erzeugen, die mindestens eine monometallische Zinkkomponente und eine Chromkomponente aufweisen.

Die Aufgabe der Erfindung wird mit den Merkmalen des Patentanspruchs 1 gelöst, wobei die Unteransprüche mindestens zweckmäßige Ausgestaltungen und Weiterbildungen des Gegenstandes des Hauptanspruches umfassen.

Der Grundgedanke des erfindungsgemäßen Verfahrens besteht zunächst darin, das Stoffgemisch, wie z.B. Abwässer, Prozeßbäder oder Galvanikschlamm, d.h. Lösungen oder Feststoffe, in eine schwach saure Lösung zu überführen, in der die Metalle, nämlich Zink, Chrom, ggf. Eisen oder Nickel, als zwei- bzw. dreiwertige Ionen vorliegen.

Erfindungsgemäß werden Galvanikschlämme in Salzsäure, Schwefelsäure oder anderen Säuren aufgelöst und durch geeignete Reduktionsmittel reduziert. Chromatierungen und Abwässer sind ebenfalls durch die Zugabe von Reduktionsmitteln zu behandeln, um eine Überführung der Metallkomponenten in entsprechende Ionenform zu erreichen.

Die so vorbereitete Lösung wird dann über eine, vorzugsweise jedoch über mehrere, in Reihe geschaltete Ionenaustauscher geführt. Die Ionenaustauscher sind mit Selektivharz gefüllt. In den Ionenaustauschern werden die Zn²⁺-Ionen gegen H⁺-Ionen ausgetauscht. Die Cr³⁺-Ionen werden hingegen nicht gebunden und passieren den Ionenaustauscher. Ausgangsseitig des Ionenaustauschers wird eine zinkfreie Chrom- bzw. Chrom, Eisen und Nickel haltige Lösung erhalten.

Nach dem Beladen des Selektivharzes im Ionenaustauscher mit Zink erfolgt ein Verdrängen bzw. Ausspülen, um Reste chromhaltiger Lösungen zu entfernen. Danach werden die Selektivharze mit Salzsäure oder Schwefelsäure regeneriert und anschließend gespült. Das erhaltene Eluat enthält nur Zink.

Damit steht zum einen eine separate Zinkfraktion als auch eine Chromfraktion zur Verfügung. Sowohl die Zink- als auch die Chromfraktion kann entweder in bestehender Form oder nach Neutralisation und Fällen als Metallhydroxid- oder -sulfidschlamm bekannten Recyclingprozessen zugeführt werden.

Erfindungsgemäß enthalten die Selektivharze als aktive Gruppe Di-(2-ethylhexyl)-phosphorsäure (D2 EHPA), die beispielsweise adsorptiv in Zwischenräumen eines Trägers aus makroporösem Polystyrol-Copolymerisat gebunden ist.

Die Erfindung soll nachstehend anhand eines Ausführungsbeispiels näher beschrieben werden. Beim erfindungsgemäßen Ausführungsbeispiel wird ein Ionenaustauscher mit D2 EHPA-Selektivharz benutzt.

Die aufzuarbeitenden Stoffgemische werden in eine schwach saure Lösung überführt, um zwei- bzw. dreiwertige Ionen der Metallkomponenten zu erhalten. Nach erfolgtem Reduktionsprozeß wird der pH-Wert der erhaltenen Lösung auf 2,0 bis 6,0, vorzugsweise auf einen Bereich zwischen 4,0 und 5,0, eingestellt.

Anschließend wird die Vorlage über mehrere, in Reihe geschaltene Ionenaustauschersäulen geführt, die mit dem erwähnten Selektivharz gefüllt sind. In den Ionenaustauschern werden lediglich die zweiwertigen Zinkionen gebunden. Ausgangsseitig der Ionenaustauscher liegt dann eine zinkfreie Lösung vor, welche lediglich noch Chrom und ggf. Eisen- und Nickel-Komponenten enthält.

Zum Selektieren des Zinks erfolgt eine Behandlung der Selektivharze mit im wesentlichen 5 bis 15 %iger Salz- oder Schwefelsäure. Nach diesem Regenerationsprozeß erfolgt ein Spülen, wobei das erhaltene Eluat nur Zink aufweist.

Somit liegen separat eine Zink- und eine Chromfraktion vor, die entweder in bestehender Form oder nach Neutralisation und Fällen bekannten Recyclingverfahren zuführbar ist. Das Selektivharz, das beim gezeigten Ausführungsbeispiel verwendet wird, ist ein makroporöses Kunstharz auf der Basis von vernetztem Polystyrol, das Di-2-Ethylhexylphosphat enthält. Die Kornform ist zweckmäßigerweise kugelförmig, wobei die Korngröße zwischen 0,3 und 1,0 mm liegt. Das Schüttgewicht des makroporösen Kunstharzes liegt im wesentlichen bei 600 g/l. Die Kapazität zur Aufnahme von Metallionen des Selektivharzes liegt beispielsweise bei 15 g Zink je Liter.

Mit dem Verfahren gemäß dem geschilderten Ausführungsbeispiel ist eine Zink/Chrom-Trennung in der Größenordnung von mindestens 1 zu 100.000 erreichbar.

Mit einem weiteren Ausführungsbeispiel der Erfindung soll die Regeneration dreiwertiger Blauchromatierungen, d.h. von Zinkchromatierungen auf Cr³⁺-Basis erläutert werden.

Es ist bekannt, daß Chromatierungen zur Nachbehandlung, d.h. zur Passivierung galvanisch aufgebrachter Zinkschichten verwendet werden. Hierbei handelt es sich um saure, Cr^{VI}-haltige Lösungen, die je nach ihrer Zusammensetzung blau-, gelb-, oliv- und schwarzfarbene Schutzschichten erzeugen.

Zum Blauchromatieren werden bekanntermaßen auch Prozeßlösungen auf der Basis von dreiwertigen Chromverbindungen verwendet, die gegenüber den sechswertigen Blauchromatierungen den Vorteil gleichmäßiger Qualität, längerer Standzeit, einfacherer Entsorgung und geringerer Toxizität aufweisen.

Chromatierungen sind jedoch Prozeßlösungen mit relativ kurzer Lebensdauer, da während der Behandlung Zink und Eisen in Lösung gehen und ab einer bestimmten Konzentration den Chromatierungsprozeß in nachteiliger Weise hinsichtlich der Qualität stören und bei weiteren Anreicherungen eine Prozeßführung unmöglich wird.

Mit dem zweiten Ausführungsbeispiel wird ein Entfernen von störendem Zink und Eisen für dreiwertige Blauchromatierungen erreicht, so daß sich die Standzeit der Prozeßlösungen wesentlich erhöht.

Zunächst wird hierfür die Prozeßlösung oder ein Teil davon durch einen Selektivharz-Ionenaustauscher gemäß dem ersten Ausführungsbeispiel der Erfindung geleitet. Hier werden Zn²⁺- und Fe³⁺-Ionen gegen H⁺-Ionen ausgetauscht. Cr³⁺-Ionen werden nicht gebunden und verbleiben in der Lösung. Die derartig von Fremdmetallen gereinigte Flüssigkeit wird dem Aktivbad wieder zugeführt.

Da Eisen in dreiwertigen Blauchromatierungen bereits in dreiwertiger Form vorliegt, sind keine zusätzlichen Schritte bei der Vorbereitung der Vorlage notwendig.

Durch den vorstehend beschriebenen Ionenaustausch sinkt der pH-Wert einer stark fremdmetallhaltigen Chromatierlösung von ursprünglichen Werten von 1,8 bis 2,0 auf ca. 1,5, was für den eigentlichen Chromatierungsprozeß von Nachteil ist. Dieser nachteilige pH-Rückgang wird jedoch durch den Anstieg während des Chromatierens wieder kompensiert.

Da der pH-Wert während des Chromatierens durch Auflösung von Zink und Eisen ansteigt, muß er durch Zugabe von Säure konstant gehalten werden. Allgemein ist der pH-Anstieg bei der Metallauflösung bzw. der pH-Rückgang beim Ionenaustausch auf ähnliche reversible Vorgänge zurückzuführen.

Es ist dabei von Vorteil, die Pflege des Chromatierungsbades zweckmäßigerweise beim Badansatz oder spätestens beim Erreichen eines noch tolerierbaren Metallgehalts durchzuführen, um pH-Korrekturen bzw. pH-Werteinstellungen mit Lauge zu vermeiden. Durch den vorgeschlagenen Ionenaustausch gemäß dem zweiten Ausführungsbeispiel entfällt die ansonsten notwendige Säurezugabe für die pH-Einstellung.

Alles in allem ist es mit dem erfindungsgemäßen Verfahren möglich, insbesondere in der galvanotechnischen Industrie anfallende Abwässer zum einen zu minimieren und zum anderen derart zu behandeln, daß durch Separierung verschiedener metallischer Bestandteile ein möglichst komplexes Recycling mit geringen Umweltbelastungen möglich wird.

## Patentansprüche

1. Verfahren zum Aufbereiten von Zink und Chrom enthaltenden Stoffgemischen, wie Abwässer, Prozeßbäder, Galvanikschlämme o.dgl.,
**gekennzeichnet** durch folgende Schritte:
- Überführen des Stoffgemisches in eine schwach bis stark saure Lösung, in der die metallischen Komponenten des Stoffgemisches als zwei- oder dreiwertige Ionen vorliegen;
- Leiten der Lösung über einen oder in Kolonne angeordnete mehrere, mit Selektivharz gefüllte Ionenaustauscher, wobei das Selektivharz derart ausgebildet ist, daß die Zn²⁺-Ionen gegen H⁺-Ionen ausgetauscht und im Ionenaustauscher gebunden, aber die Cr³⁺-Ionen nicht gebunden werden und den Ionenaustauscher, unter Bildung einer zinkfreien chromhaltigen Lösung passieren.

2. Verfahren nach Anspruch 1,
dadurch gekennzeichnet,
daß das Selektivharz Di-(2-ethylhexyl)-Phosphorsäure enthält.

3. Verfahren nach einem der Ansprüche 1 oder 2,
dadurch gekennzeichnet,
daß nach Beladen des Selektivharzes der Ionenaustauscher mit Zink dieses mit Mineralsäuren, wie z. B. 5 bis 15 %-iger Salz- oder Schwefelsäure regeneriert und gespült wird, wobei das Eluat nur eine monometallische Zink-Fraktion enthält.

4. Verfahren nach einem der vorhergehenden Ansprüche,
dadurch gekennzeichnet,
daß Galvanikschlämme in Salzsäure, Schwefelsäure o.dgl. aufgelöst und eine Reduktion Cr^{VI} auf Cr³⁺ bzw. Fe³⁺ auf FE²⁺ erfolgt, wobei nach Reduktion der pH-Wert der erhaltenen Lösung in einen Bereich zwischen 1,5 und 6,0, vorzugsweise zwischen 4,0 und 5,0 eingestellt wird.

5. Verfahren nach einem der vorhergehenden Ansprüche,
dadurch gekennzeichnet,
daß in die Ionenaustauschern Zn²⁺-Ionen durch H⁺-Ionen ersetzt werden.

6. Verfahren nach einem der vorhergehenden Ansprüche,
dadurch gekennzeichnet,
daß die aktive Gruppe des Selektivharzes entweder chemisch mit dem Harz verbunden, oder adsorptiv in Zwischenräume eines Trägers aus makroporösem Polystyrol-Copolymerisat o.dgl. gebunden ist.

7. Verfahren nach Anspruch 1,
dadurch gekennzeichnet,
daß das Selektivharz eine oder mehrere der folgenden Verbindungen als aktive Gruppe enthält:
- organische Phosphorsäureester, vorzugsweise D1-(2-ethylhexyl)-Phosphorsäure
- organische Phosphonsäureester
- organische Phosphinsäureester
- substituierte 8-hydroxychinoline, vorzugsweise 7-(4-Ethyl-1-methyloctyl)-8-hydroxychinolin
- 8-(p-alkylphenyl-sulfonamid)-chinoline
- Alkyl-Carbonsäuren der Formel: 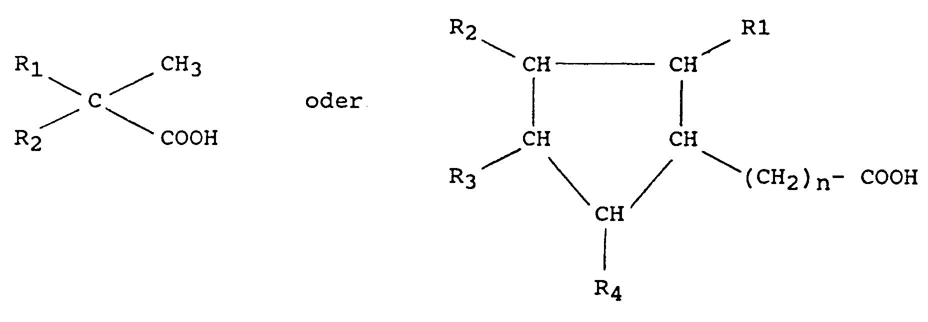 R₁-R₄ = Alkylgruppen
